# EUROPEAN PATENT APPLICATION

(11) **EP 4 815 174 A1**
(43) Date of publication of application: **30.09.2026**
(21) Application number: 24817825.3
(22) Date of filing: 04.03.2024
(51) Int. Cl.: H01M 50/531, H01M 50/553, H01M 50/567, H01M 50/15, H01M 50/188, H01M 50/59, H01M 50/588

(54) **SECONDARY BATTERY COMPRISING CURRENT COLLECTOR**

(30) Priority: 21.11.2023 KR 20230162776
(71) Applicant: Samsung SDI Co., Ltd., Yongin-si, Gyeonggi-do 17084 (KR)
(72) Inventor: KIM, Kee Yun, Yongin-si, Gyeonggi-do 17084 (KR)
(74) Representative: Gulde & Partner
(86) International application number: PCT/KR2024/002745
(87) International publication number: WO 2025/110355

(57) **Abstract**

The present disclosure relates to a secondary battery including a coupling structure of a current collector and a cap assembly and is directed to providing a secondary battery capable of improving a structure of the current collector to remove a separate member connecting a terminal and enable a simple connecting process, thereby saving material costs and improving productivity. To this end, the present disclosure provides a secondary battery including a case having an opening formed at a least one end thereof, an electrode assembly accommodated in the case, a current collector electrically connected to the electrode assembly, a terminal electrically connected to the current collector, and a cap assembly installed in the opening of the case, wherein the current collector includes a conductive boss formed to face the terminal of the cap assembly.

## Description

### [Technical Field]

The present disclosure relates to a secondary battery, and more specifically, to a secondary battery including a coupling structure of a current collector and a cap assembly.

### [Background Art]

Secondary batteries are batteries that can be charged and discharged, unlike primary batteries that cannot be recharged. Generally, a secondary battery includes an electrode assembly including a positive electrode plate, a separator, and a negative electrode plate, a case that accommodates the electrode assembly, an electrode terminal connected to the electrode assembly, a vent for degassing gas generated inside the case, and the like.

The electrode assembly is accommodated inside the case (or a can), and the electrode terminal and the vent are installed on a cap plate coupled to the case to form a cap assembly. In addition, the electrode assembly includes positive and negative electrode tabs, and current collectors are connected to the electrode tabs. The current collector inside the case is electrically connected to the electrode terminal outside the cap assembly through a predetermined connection member.

The above information disclosed in this Background section is for enhancement of understanding of the background of the present disclosure, and therefore, it may contain information that does not constitute a related (or prior) art.

### [Disclosure]

### [Technical Problem]

As the above-described connection member connecting an electrode terminal of a cap assembly to an electrode assembly inside a case in a prismatic secondary battery structure, rivets, welding, and the like may be used. The connection of the electrode terminal and the current collector by the connection member requires a joining process at both ends and involves the addition and management of a member called the connection member.

Therefore, the present disclosure is directed to providing a secondary battery in which a structure of a current collector is improved to remove a separate member connecting a terminal and enable a simple connecting process, thereby saving material costs and improving productivity.

Aspects and features of the present disclosure are not limited to those described above, and other aspects and features not specifically mentioned herein will be clearly understood by those skilled in the art from the description of the present disclosure below.

### [Technical Solution]

According to one aspect of the present disclosure, there is provided a secondary battery including a case having an opening formed at a least one end thereof, an electrode assembly accommodated in the case, a current collector electrically connected to the electrode assembly, a terminal electrically connected to the current collector, and a cap assembly installed in the opening of the case, wherein the current collector includes a conductive boss formed to face the terminal of the cap assembly.

According to another aspect of the present disclosure, there is provided a current collector for a secondary battery including a case having an opening formed in a least one end thereof, an electrode assembly accommodated in the case, a terminal electrically connected to the electrode assembly, and a cap assembly installed in the opening of the case, and the current collector includes a conductive boss electrically connecting the electrode assembly to the terminal and formed to face the terminal of the cap assembly.

In one embodiment, the conductive boss of the current collector may include a cavity formed in at least a portion therein. In another embodiment, the conductive boss of the current collector may include a recess formed in an end thereof. In still another embodiment, the conductive boss may include a ring groove accommodating a ring member.

### [Advantageous Effects]

According to the present disclosure, by improving a structure of a current collector connecting an electrode terminal of a cap assembly to an electrode assembly inside a case in a structure of a secondary battery to remove a separate member connecting a terminal and enable a simple connecting process, it is possible to save material costs and improve productivity.

Effects of the present disclosure are not limited to those described above, and other effects not specifically mentioned herein will be clearly understood by those skilled in the art from the description of the present disclosure below.

### [Description of Drawings]

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1A is a top perspective view of a prismatic secondary battery according to an example;
FIG. 1B is a cross-sectional view along line I-I' in FIG. 1A;
FIG. 2 is an exploded perspective view showing a coupling relationship between a current collector and a cap assembly according to one embodiment of the present disclosure;
FIG. 3 is a perspective view for describing a configuration of one embodiment of the current collector;
FIG. 4 is a cross-sectional view along line II-II' in FIG. 3;
FIG. 5 shows a state in which a ring member is fastened to a ring groove formed in a conductive boss;
FIG. 6 is a cross-sectional view along line III-III' in FIG. 5;
FIGS. 7A and 7B show a modified embodiment of a conductive boss (170);
FIG. 8 is a partial cross-sectional view of a cap assembly including a cap plate in which a terminal and related members are assembled and a current collector according to one embodiment of the present disclosure;
FIG. 9 is a schematic view for describing a riveting method of a conductive boss and a terminal;
FIG. 10 is a cross-sectional view of a secondary battery including a cap assembly assembled by joining the current collector to the cap plate according to one embodiment of the present disclosure;
FIG. 11 is an exemplary view of a secondary battery module formed by arranging secondary batteries manufactured according to embodiments of the present disclosure;
FIG. 12 is an exemplary view of a secondary battery pack including the secondary battery module shown in FIG. 11; and
FIG. 13 is a conceptual diagram showing the secondary battery pack shown in FIG. 12 installed in a vehicle.

### [Modes of the Invention]

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

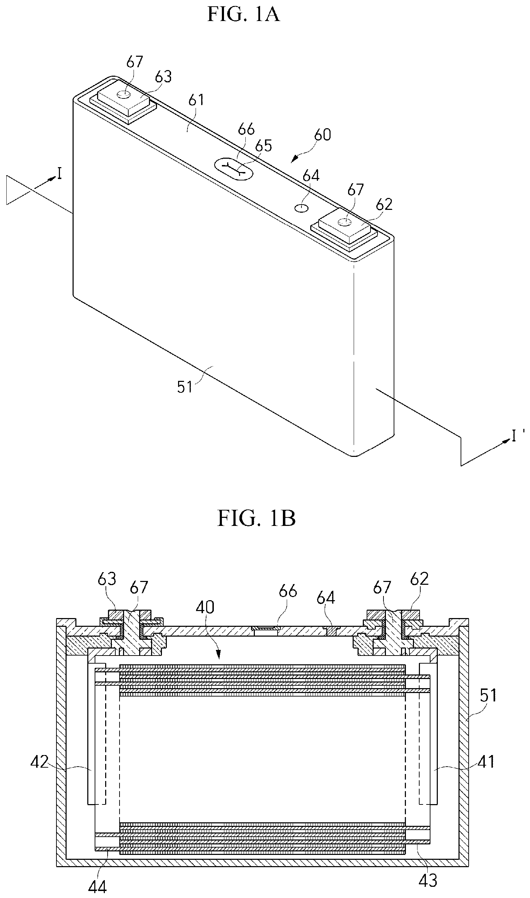

FIG. 1A is a top perspective view of a prismatic secondary battery to which the idea of the present invention can be applied.

A case 51 defines an overall appearance of the prismatic secondary battery, and may be made of a conductive metal, such as aluminum, aluminum alloy, or nickel-plated steel. In addition, the case 11 may provide a space for accommodating an electrode assembly therein.

A cap assembly 60 may include a cap plate 61 that covers the opening of the case 51. In some examples, the case 51 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent 66 formed with a notch 65. The vent 66 is for discharging gas generated inside the secondary battery.

ig. 1B is a cross-sectional view taken along line I-I' of Fig. 1A. Referring to Fig. 1B, the internal structure of one type of prismatic secondary battery and the combined structure with a cap assembly 60 are described. The prismatic secondary battery illustrated in Fig. 1B may basically include an electrode assembly 40, a first current collector 41, a first terminal 62, a second current collector 42, a second terminal 63, and a cap assembly 60.

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction of the case. In addition, the electrode assembly 40 is a stack type rather than a winding type, and the shape of the electrode assembly 40 is not limited in the present disclosure. In addition, the electrode assembly 40 may be a Z-stack electrode assembly in which a first electrode plate and a second electrode plate are inserted into both sides of a separator, which is then bent into a Z-stack. In addition, one or more electrode assemblies 40 may be stacked such that long sides of the electrode assemblies are adjacent to each other and accommodated in the case, and the number of electrode assemblies in the case is not limited in the present disclosure. The first electrode plate of the electrode assembly 40 may act as a negative electrode, and the second electrode plate may act as a positive electrode, of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like, and the first electrode plate may include a first electrode tab (or a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly, or the first electrode tab 43 protrudes to one side of the electrode assembly more than the separator without being separately cut.

The second electrode plate may be formed by applying a second electrode active material, such as a transition metal oxide, on a second electrode current collector formed of a metal foil, such as aluminum or an aluminum alloy, and the second electrode plate may include a second electrode tab 44 (or a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than the separator without being separately cut.

In some embodiments, the first electrode tab 43 may be positioned on the right side of the electrode assembly 40, and the second electrode tab 44 may be positioned on the left side of the electrode assembly 40, or may be positioned on one side in the same direction. Also, in some embodiments, the first electrode tab 43 and the second electrode tab 44 may be positioned on the upper side of the electrode assembly 40. Here, left, right, and upper are for convenience of explanation based on the secondary battery illustrated in FIG. 1B, and the positions may change when the secondary battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

At both ends of the electrode assembly 40 as described above, a first electrode tab 43 of the first electrode plate and a second electrode tab 44 of the second electrode plate are respectively extended. In some embodiments, the electrode assembly 40 is accommodated in the case 10 along with an electrolyte.

In the above electrode assembly 40, the first electrode tabs 43 and the second electrode tabs 44 extending from the first electrode plate and the second electrode plate may be connected to the first current collector 41 and the second current collector 42 by welding, respectively. As mentioned above, in some embodiments in which the first electrode tab 43 and the second electrode tab 44 are located at the top of the electrode assembly 40, the first and second current collectors are located at the top of the electrode assembly 40.

The first current collector 41 and the second current collector 42 are electrically connected to the first terminal 62 and the second terminal 63 described in FIG. 1A, respectively. In some embodiments, the connection members 67 may each have an outer peripheral surface that is threaded, and may be fastened to the first terminal 62 and the second terminal 63 by screwing. However, the present disclosure is not limited thereto, and the connection members 67 may also be coupled to the first terminal 62 and the second terminal 63 by riveting or welding.

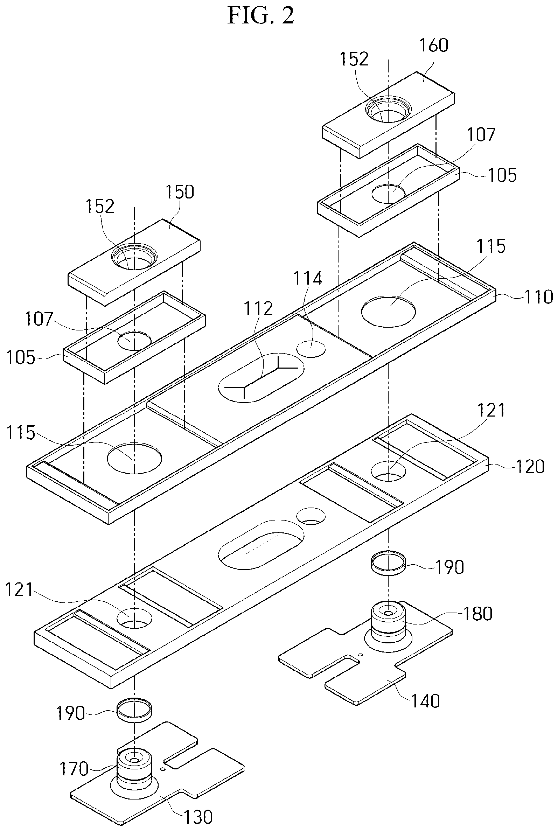

FIG. 2 is an exploded perspective view showing a coupling relationship between a current collector and a cap assembly according to one embodiment of the present disclosure.

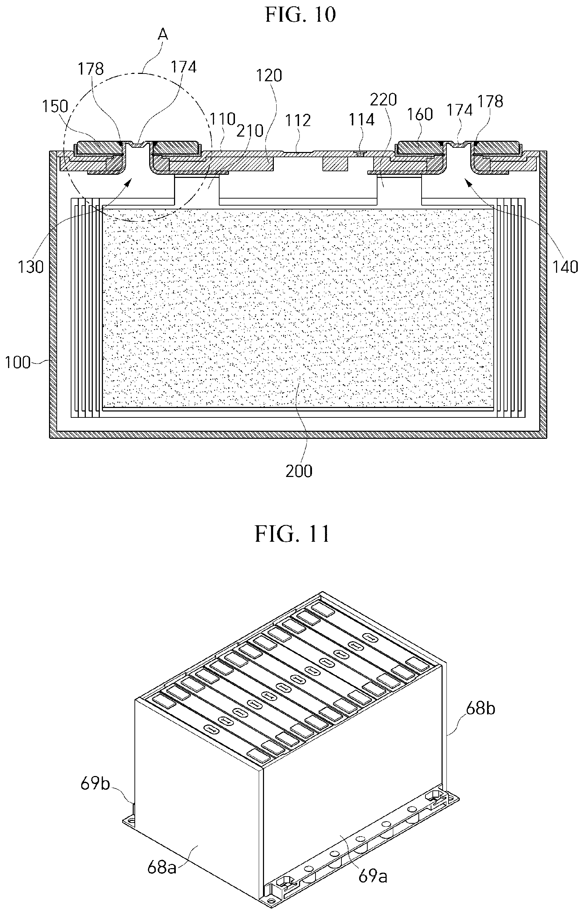

Substantially, current collectors 130 and 140 located at the bottom of a cap plate 110 may be connected to the positive and negative electrode tabs 43 and 44 (see FIG. 1B) or 210 and 220 (see FIG. 10) of the electrode assembly 40 (see FIG. 1B) or 200 (see FIG. 10) in a case, respectively, and connected to terminals 150 and 160 located at the top of the cap plate 110, respectively. A vent part 112 and an electrolyte injection port 114 may be formed on the cap plate 110.

More specifically, a bottom insulator 120 may be located at the bottom of the cap plate 110, and a first current collector 130 and a second current collector 140 may be located at the bottom of the bottom insulator 120. A first terminal 150 and a second terminal 160 may be located at the top of the cap plate 110 and electrically connected to the first current collector 130 and the second current collector 140, respectively.

FIG. 2 shows that the first current collector 130 and the second current collector 140 have a form that may be used in a so-called top-tab or multi-tab structure in which the electrode tabs 210 and 220 (see FIG. 10) of the electrode assembly 200 (see FIG. 10) are located at the top of the electrode assembly 200 as described above through FIG. 1B. However, in the present disclosure, the first current collector 130 and the second current collector 140 are not limited to such a top-tab structure and may also be applied to a battery having a side-tab structure, for example, as shown in FIG. 1B.

To electrically connect the first terminal 150 and the second terminal 160 located at the top of the cap plate 110 to the first current collector 130 and the second current collector 140, according to one embodiment of the present disclosure, conductive bosses 170 and 180 are provided on the first current collector 130 and the second current collector 140, respectively. The first terminal 150 and the second terminal 160 may be electrically connected to the first current collector 130 and the second current collector 140, respectively, by riveting with the conductive bosses 170 and 180.

In FIG. 2, an insulator 105 may be interposed between the first terminal 150 and/or the second terminal 160 and a surface of the cap plate 110 located thereunder. The reason that such an insulator is required is, for example, to prevent a short circuit with a positive terminal when the case has a negative polarity (and vice versa). In addition, a seal gasket 190 for sealing a battery case may be mounted on the conductive bosses 170 and 180 of the first current collector 130 and the second current collector 140. Since an electrolyte is injected into the case, the case is sealed by the seal gasket 190.

The components of the cap assembly, for example, the lower insulator 120, the cap plate 110, the insulator 105, the first terminal 150, and the second terminal 160 may be formed with through-holes 121, 115, and 107 through which the conductive bosses 170 and 180 of the first current collector 130 and the second current collector 140, which are located at the lowermost portion, may pass. The conductive bosses 170 and 180 passing through the through-holes may be electrically connected by being coupled to through-holes 152 of the first terminal 150 and the second terminal 160, which are located at the uppermost portion.

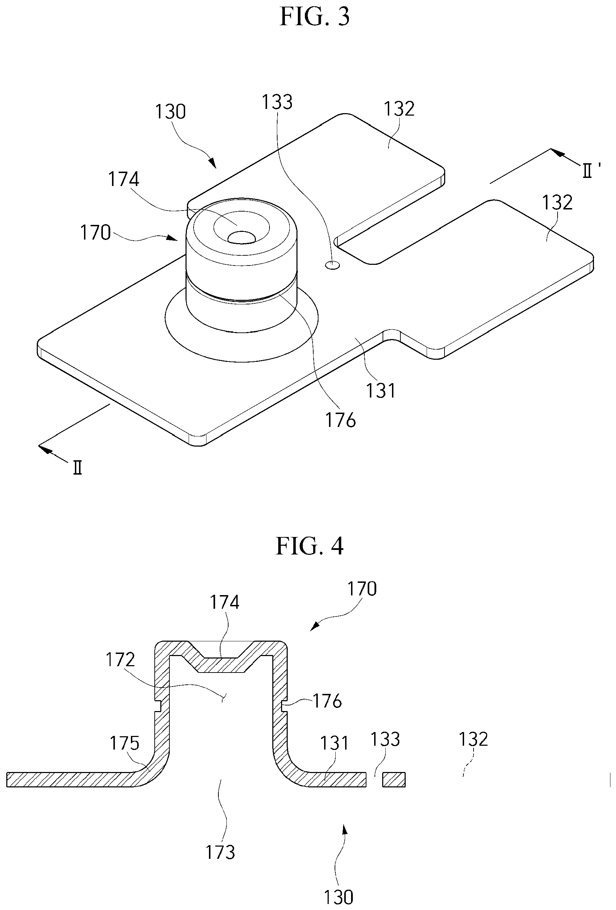

FIG. 3 is a perspective view for describing a configuration of one embodiment of the first current collector 130 and the second current collector 140, and FIG. 4 is a cross-sectional view along line II-II' in FIG. 3. For simplicity of description, the first and second current collectors 130 and 140 will be collectively referred to as the current collector 130, and the first terminal 150 and the second terminal 160 will be collectively referred to as the terminal 150.

In FIG. 3, the current collector 130 may include a tab connection portion 132 located on a first portion of a current collector substrate 131 and connected to the electrode tabs 43 and 44 (see FIG. 1B) or 210 and 220 (see FIG. 10) of the electrode assembly 40 (see FIG. 1B) or 200 (see FIG. 10) and the conductive boss 170 located on a second portion of the current collector substrate 131 and connected to the terminal 150. A through-hole 133 formed adjacent to the tab connection portion 132 may be used to be joined to the electrode tab of the electrode assembly located at the bottom of the tab connection portion 132.

The current collector substrate 131 may have a flat shape as shown, but is not limited thereto. The tab connection portion 132 is shown as having a bifurcated shape, but it may be modified depending on the characteristics of the electrode assembly and the electrode tab that are located at the bottom of the tab connection portion 132.

Referring to FIG. 4, which shows a longitudinal cross-sectional view of FIG. 3, the conductive boss 170 may be formed of a boundary wall 171 having a substantially "∩" shape formed by continuously extending the current collector substrate 131. The conductive boss 170 may include a cavity 172, which is an empty space therein, and include an opening 173, which is open toward the electrode assembly located thereunder, at the bottom thereof. An upper surface of the conductive boss 170 may be recessed downward to form a recess 174. The recess 174 may be used to perform riveting to the terminal 150.

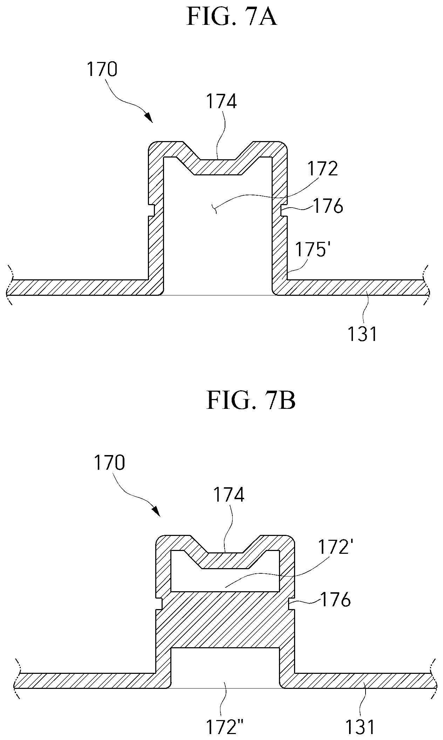

The conductive boss 170 may be formed integrally with the current collector substrate 131. The conductive boss 170 may have a lower portion continuously connected to the current collector substrate 131 by being formed integrally with the current collector substrate 131, and the connection portion may be a curved connection portion 175 having a curved shape, but is not limited thereto (see FIGS. 7A and 7B).

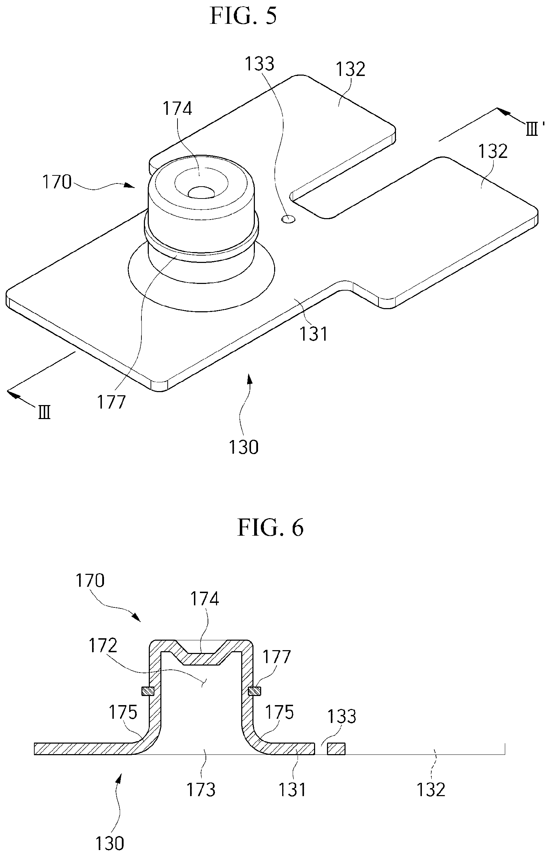

A ring groove 176 may be formed around a circumferential surface of the conductive boss 170. A ring member 177 (see FIG. 5) such as a snap ring, an O-ring, an E-ring, or a spring ring may be fastened to the ring groove 176. The ring member 177 may be used for positioning and reinforcing the fastening strength of surrounding members to be assembled when the cap assembly is assembled to manufacture a secondary battery (detailed descriptions thereof will be provided below). A height of the ring groove 176, that is, a distance from an upper surface of the current collector substrate 131, may vary depending on the number, shapes, or the like of related members near the conductive boss 170.

In some embodiments, the conductive boss 170 may be formed simultaneously with the manufacturing of the current collector substrate 131 using a press mold to integrally form the conductive boss 170 with the current collector substrate 130. After the conductive boss 170 is formed by a press, the ring groove 176 may be formed by mechanical cutting, laser etching, or the like.

In another embodiment, the current collector substrate 131, the conductive boss 170, and the ring groove 176 may be simultaneously manufactured by casting.

In still another embodiment, the current collector substrate 131 and the conductive boss 170 may be simultaneously manufactured by casting, and then the ring groove 176 may be formed.

FIG. 5 shows a state in which the ring member 177 is fastened to the ring groove 176 formed on the circumferential surface of the conductive boss 170. The ring member 177 may be a known ring such as a snap ring, an O-ring, an E-ring, or a spring ring as described above, but is not limited thereto, and may be a customized ring having a specialized shape.

A thickness or diameter of the ring member 177 may vary depending on the number, shapes, or the like of related members near the conductive boss 170.

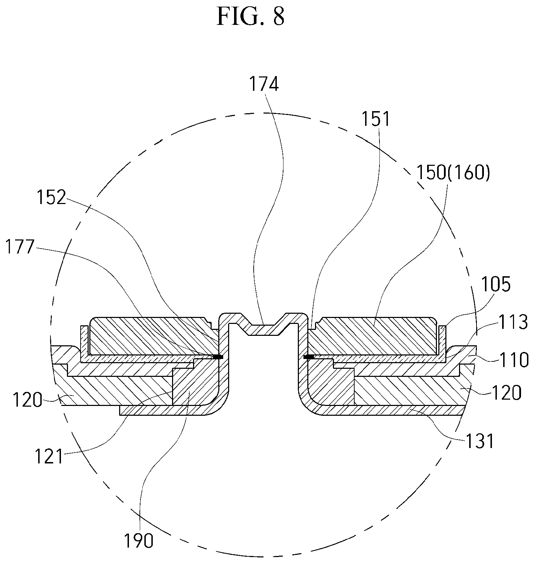

FIG. 6 is a cross-sectional view along line III-III' in FIG. 5. FIG. 6 shows a cross-sectional view showing the ring member 177 fastened to the ring groove 176 shown in the cross-sectional view of FIG. 5. A function of the ring member 177 will be described in detail below with reference to FIG. 8.

FIGS. 7A and 7B show a modified embodiment of the conductive boss 170.

FIG. 7A shows that, unlike FIGS. 4 and 6 introduced above, a connection portion between the current collector substrate 131 and the conductive boss 170 is an angled connection portion 175' rather than a curved connection portion. The cavity 172 may be formed entirely inside the conductive boss 170.

FIG. 7B shows a form in which the cavity formed inside the conductive boss 170 is formed only partially. The conductive boss 170 shown in FIG. 7B may include a first cavity 172' located in a portion necessary for riveting an end portion thereof and a second cavity 172" located at the bottom in a portion in which a riveting jig (described below) is to be located. Therefore, it is possible to additionally reinforce the strength of the conductive boss 170.

FIG. 8 is a partial cross-sectional view of the cap assembly including the cap plate 110 in which the terminal 150 and related members are assembled and the current collector 130 of the present disclosure described above. FIG. 8 is similar to the assembled state of the members shown in the exploded view of FIG. 2. Among the first terminal 150 and the second terminal 160 included in the secondary battery, only the first terminal 150 and related members are shown.

In FIG. 8, the lower insulator 120 may be located at the bottom of the cap plate 110, and the current collector 130 and the terminal 150 may be connected with the lower insulator 120 interposed therebetween. The conductive boss 170 formed on the substrate 131 of the current collector 130 protrudes upward through the through-hole 121 formed in the lower insulator 120, and the terminal 150 may be coupled to the protruding conductive boss 170. The through-hole 152 through which the conductive boss 170 passes is formed in the terminal 150 in order to be coupled to the current collector 130 (see FIG. 2).

The seal gasket 190 for sealing the case is covered on the conductive boss 170 to seal gaps between the current collector 130 and the terminal 150 and between adjacent members. The recess 174 formed in the upper surface of the conductive boss 170 may be riveted to the terminal 150 by a riveting machine (if necessary, welding may be performed on the corresponding area after riveting has been performed). When the recess 174 at the end of the conductive boss 170 is pressed during riveting and joined to the terminal 150, a riveting accommodating groove 151 for accommodating expansion during riveting may be formed near the insertion hole 152 of the terminal 150 in order to reinforce the joining property.

By the ring member 177 fastened to the ring groove 176 of the conductive boss 170, the seal gasket 190 and adjacent members may be at correct locations. In addition, the ring member 177 functions to restrict the conductive boss 170 of the current collector 130 from being excessively inserted into the through hole 152 of the terminal 150 and control the stretching (expansion) of the end portion of the conductive boss 170 during riveting of the recess 174. Therefore, it is possible to reinforce the fastening strength of the current collector 130 and the terminal 150.

As described above, the insulator 105 may be interposed between the cap plate 110 and the terminal 150. In addition, a step 113 may be formed on the cap plate 110 so that a surface 111 on which the insulator 105 and the terminal 150 are seated is located at the bottom of an upper surface of the cap plate 110. However, such a configuration is not limited thereto, and the insulator 105 and the terminal 150 may be placed directly on the surface of the cap plate 110.

Although FIG. 8 shows that the seating surface 111 of the cap plate 110 and the seal gasket 190 are located at the bottom of the ring member 177 fastened to the conductive boss 170, the insulator 105 is located at the same location as the ring member 177, and the terminal 150 is located at the top of the ring member 177, the present disclosure is not limited to such a structure.

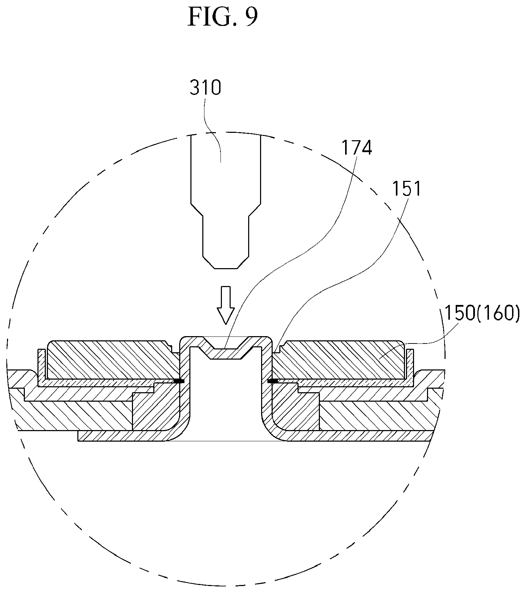

FIG. 9 is a schematic view for describing a riveting method of the conductive boss 170 and the terminal 150.

As shown in FIG. 9, after the related members are first assembled and a riveting support jig 300 is installed at the bottom of the current collector 130, an impact is applied to the recess 174 at the end of the conductive boss 170 using a riveting machine 310 so that the recess 174 is riveted into the through-hole 152 (see FIGS. 2 and 8) of the terminal 150. As the recess 174 at the end of the conductive boss 170 is stretched by the impact of the riveting machine 310 and it expands, the recess 174 is accommodated into the riveting accommodating groove 151 formed in the terminal 150 and firmly joined thereto.

In this case, repeated description is provided, but the seal gasket 190 and other members thereunder may be firmly located between the terminal 150 and the current collector 130 without departing from correct locations due to the ring member 177 fastened to the conductive boss 170, and the amount of stretching (the amount of expansion) of the end portion of the conductive boss 170 may be controlled consistently.

FIG. 10 is a cross-sectional view of a secondary battery including a cap assembly assembled by coupling the current collectors 130 and 140 described above to the cap plate 110.

Referring to FIG. 10 together with FIG. 8, the tab connection portion 132 of the current collector substrate 131 of the first current collector 130 may be connected to the first electrode tab 210 of the electrode assembly 200, and the tab connection portion 142 of the substrate 141 of the second current collector 140 may be connected to the second electrode tab 220 of the electrode assembly 200.

The coupling relationship of the lower insulator 120, the seal gasket 190, the insulator 105, the first terminal 150, and the second terminal 160 that are located at the bottom of the cap plate 110 is as shown in FIG. 8. In addition, the vent part 112 and the electrolyte injection port 114 that are formed on the cap plate 110 are as described in FIG. 2.

In FIG. 10, the recess 174 at the end of the conductive boss 170 of the first current collector 130 is accommodated by being riveted into the riveting accommodating groove 151 of the first terminal 150 described in FIG. 8, and a recess 184 at the end of the conductive boss 180 of the second current collector 140 is accommodated by being riveted into the riveting accommodating groove 151 of the second terminal 160. A riveting completion area is denoted as "178" in FIG. 10.

The secondary battery shown in FIG. 10 is a secondary battery having a top-tab structure, but the current collector 130 and the cap assembly assembled therewith according to the present disclosure are not limited to the top-tab structure, and may also be applied to the side-tab structure shown in FIG. 1B.

Hereinafter, one embodiment of a method of manufacturing a secondary battery including the above-described current collector and cap assembly will be described.

The method of manufacturing a secondary battery according to one embodiment of the present disclosure may include manufacturing a current collector substrate 131 connecting an electrode assembly 200 to a terminal 150, forming a conductive boss 170 on the current collector substrate 131, forming a ring groove 176 accommodating a ring member 177 in the conductive boss 170, and riveting the conductive boss 170 to the terminal 150.

The manufacturing of the current collector substrate 131, the forming of the conductive boss 170 on the current collector substrate 131, and the forming of the ring groove 176 in the conductive boss 170 may be the manufacturing of the current collector 130 shown in FIGS. 3 and 5. In addition, in the riveting, it may be joined with the terminal 150 by riveting the end of the conductive boss 170 passing through a through-hole 152 formed in the terminal 150 as shown in FIG. 9.

Referring to FIGS. 8 and 2, the method of manufacturing a secondary battery according to some embodiments may further include mounting a seal gasket 190 on the conductive boss 170, fastening the ring member 177 to the ring groove 176, and assembling a cap plate 110. The ring member 177 may function to seat the seal gasket 190 and a lower insulator 120 at the correct locations as shown in FIG. 8.

In addition, the method of manufacturing a secondary battery according to some embodiments may further include assembling the lower insulator 120 between the cap plate 110 and the current collector substrate 131.

Moreover, the method of manufacturing a secondary battery according to some embodiments may further include interposing an insulator 105 at a location at which the terminal 150 is mounted on the upper surface of the cap plate 110.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: Lia_{A}1_{-bX}b_{O}2_{-cD}c (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L1_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the negative electrode and the positive electrode. As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 11 is a perspective view of a secondary battery module in which secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together.

The plurality of secondary batteries may be arranged in a space defined by a pair of facing end plates 68a and 68b and a pair of facing side plates 69a and 69b. The secondary batteries may be arranged in an arrangement (direction) and number to obtain desired voltage and current specifications.

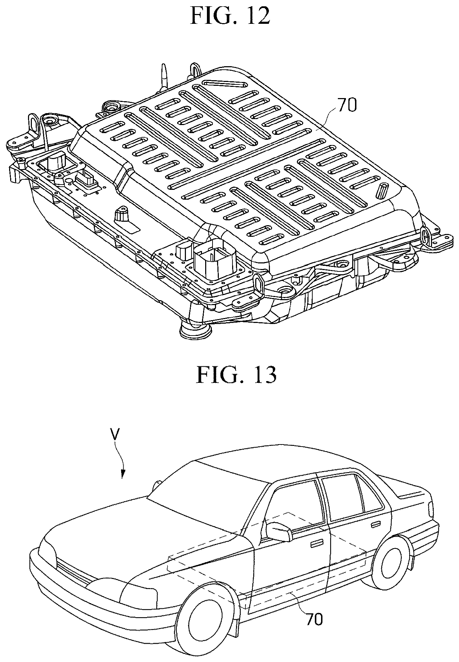

FIG. 12 is a perspective view of a battery pack 70 according to embodiments of the present disclosure. Referring to FIG. 12, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The secondary battery pack may be mounted on a vehicle. The vehicle may be, for example, an electric vehicle, a hybrid vehicle, or a plug-in hybrid vehicle. The vehicle may be a four-wheeled vehicle or a two-wheeled vehicle but is not limited thereto.

FIG. 13 shows a vehicle that includes the secondary battery pack shown in FIG. 12. FIG. 13 shows a vehicle V that includes the battery pack 70 shown in FIG. 12 on the lower body thereof. The vehicle V may operate by receiving power from the battery pack 70 according to one embodiment of the present disclosure.

Although the present disclosure has been described above with respect to embodiments thereof, the present disclosure is not limited thereto. Various modifications and variations can be made thereto by those skilled in the art within the spirit of the present disclosure as defined by the appended claims and their equivalents.

### [DESCRIPTIONS OF DRAWING SYMBOLS]

40: electrode assembly, 41: first current collector, 42: second current collector, 43: first electrode tab, 44: second electrode tab, 51: case, 60: cap assembly, 61: cap plate, 62: first terminal, 63: second terminal, 64: electrolyte injection port, 65: notch, 66: vent, 67: connection member, 68a, 68b: end plates, 69a, 69b: side plates, 70: secondary battery pack, 100: case, 105: insulator, 110: cap plate, 107, 115: through-holes, 111: seating surface, 112: vent part, 114: electrolyte injection port, 120: lower insulator, 121: through-hole, 130: first current collector, 140: second current collector, 131: current collector substrate, 132: tab connection portion, 133: through-hole, 140: second current collector, 150: first terminal, 151: riveting accommodating groove, 160: second terminal, 170, 180: conductive boss, 172, 172', 173": cavities, 171: boundary wall, 173: opening, 174: recess, 175: curved connection portion, 175': angled connection portion, 176: ring groove, 177: ring member, 178: riveting completion area, 190: seal gasket, 200: electrode assembly, 210: first electrode tab, 220: second electrode tab, 300: riveting support jig, 310: riveting machine, V: vehicle

## Claims

1. A secondary battery comprising:
a case having an opening formed at a least one end thereof;
an electrode assembly accommodated in the case;
a current collector electrically connected to the electrode assembly; and
a cap assembly, installed in the opening of the case, including a terminal electrically connected to the current collector,
wherein the current collector comprises a conductive boss formed to face the terminal of the cap assembly.

2. The secondary battery as claimed in claim 1, wherein the conductive boss of the current collector is connected to a substrate in a curved shape.

3. The secondary battery as claimed in claim 1, wherein the conductive boss of the current collector is connected to a substrate in an angled shape.

4. The secondary battery as claimed in claim 1, wherein the conductive boss of the current collector comprises a cavity formed in at least a portion therein.

5. The secondary battery as claimed in claim 1, wherein the conductive boss of the current collector comprises a recess formed in an end thereof.

6. The secondary battery as claimed in claim 1, wherein the conductive boss of the current collector comprises a ring groove accommodating a ring member.

7. The secondary battery as claimed in claim 6, wherein the terminal is located at the top of the ring member accommodated in the ring groove.

8. The secondary battery as claimed in claim 1, wherein the conductive boss of the current collector is riveted to the terminal, and
the terminal comprises a riveting accommodating groove accommodating an end that stretches during riveting of the conductive boss.

9. The secondary battery as claimed in claim 6, wherein the cap assembly further comprises a cap plate located between the current collector and the ring member accommodated in the ring groove.

10. The secondary battery as claimed in claim 6, further comprising a seal gasket located between the current collector and the ring member accommodated in the ring groove.

11. The secondary battery as claimed in claim 1, further comprising an insulator located between the current collector and the terminal.

12. A current collector for a secondary battery comprising a case having an opening formed at a least one end thereof, an electrode assembly accommodated in the case, and a cap assembly, installed in the opening of the case, including a terminal electrically connected to the electrode assembly,
the current collector comprising
a conductive boss electrically connecting the electrode assembly to the terminal and formed to face the terminal of the cap assembly.

13. The current collector as claimed in claim 12, wherein the conductive boss is connected to a substrate in a curved shape.

14. The current collector as claimed in claim 12, wherein the conductive boss is connected to a substrate in an angled shape.

15. The current collector as claimed in claim 12, wherein the conductive boss comprises a cavity formed in at least a portion therein.

16. The current collector as claimed in claim 12, wherein the conductive boss comprises a recess formed in an end thereof.

17. The current collector as claimed in claim 12, wherein the conductive boss comprises a ring groove accommodating a ring member.
